# EUROPÄISCHE PATENTSCHRIFT

(11) **EP 3 625 156 B1**
(45) Veröffentlichungstag und Bekanntmachung des Hinweises auf die Patenterteilung: **02.08.2023**
(21) Anmeldenummer: 18724864.6
(22) Anmeldetag: 15.05.2018
(51) Int. Cl.: B65G 1/10, B65G 47/51, B65G 65/00

(54) **VORRICHTUNG ZUR ZWISCHENLAGERUNG PLATTENFÖRMIGER WERKSTÜCKE**
DEVICE FOR THE INTERMEDIATE STORAGE OF PLATE-LIKE WORKPIECES
DISPOSITIF POUR LE STOCKAGE INTERMÉDIAIRE DE PIÈCES EN FORME DE PLAQUES

(30) Priorität: 19.05.2017 AT 504292017
(43) Veröffentlichungstag der Anmeldung: 25.03.2020
(73) Patentinhaber: Barbaric, Stefan, 4040 Kirchschlag (AT)
(72) Erfinder: Barbaric, Stefan, 4040 Kirchschlag (AT)
(74) Vertreter: KLIMENT & HENHAPEL
(86) Internationale Anmeldenummer: PCT/EP2018/062494
(87) Internationale Veröffentlichungsnummer: WO 2018/210798

(56) Entgegenhaltungen:
- US-A1- 2008 264 758
- US-A1- 2008 284 094
- US-A1- 2009 263 218
- Schneider Electric: "Application Notes: Roller Conveyor (2003)", , 11. Dezember 2005 (2005-12-11), Seiten 1-6, XP055423399, Gefunden im Internet: URL:http://static.schneider-electric.us/do cs/Machine Control/0105DB0301.pdf [gefunden am 2017-11-09]

## Beschreibung

Die Erfindung betrifft eine Vorrichtung zur Zwischenlagerung plattenförmiger Werkstücke mit einem aus übereinander angeordneten Ablagefächern gebildeten Aufnahmemagazin für die plattenförmigen Werkstücke, gemäß dem Oberbegriff von Anspruch 1.

In Fertigungseinrichtungen, insbesondere für den Zuschnitt, die Bearbeitung und die Montage plattenförmiger Werkstücke, beispielsweise in der Möbelindustrie, unterliegen zunehmender Automatisierung. Die plattenförmigen Werkstücke werden dabei zwischen unterschiedlichen Fertigungsmaschinen transportiert, wo sie automatisiert zugeschnitten und bearbeitet werden, und anschließend einer Montage- oder Verpackungsstation zugeführt. Dabei stellt sich das Problem, dass die Bearbeitungsdauer für die unterschiedlichen Werkstücke mitunter variiert, etwa wenn unterschiedliche Arbeitsschritte ausgeführt werden müssen. Falls in nachfolgenden Abschnitten der Fertigung die unterschiedlichen Werkstücke wieder zeitgleich verarbeitet werden müssen, etwa im Zuge einer Montage oder Verpackung, ergibt sich das Problem der Zwischenlagerung einzelner Werkstücke.

In herkömmlicher Weise werden Werkstücke stapelweise zwischengelagert. Bei Bedarf wird ein Werkstück dem Lagerstapel entnommen. Falls ein bestimmtes Werkstück dem Lagerstapel entnommen werden muss, kann es aber erforderlich werden die gestapelten Werkstücke umzuschlichten, was einen erheblichen Zeit- und Arbeitsaufwand mit der Gefahr der Beschädigung von Werkstücken nach sich zieht. Auch eine Automatisierung der Stapelung und Entnahme einzelner Werkstücke ist auf diese Weise kaum möglich. Dieses Problem der Zwischenlagerung stellt sich insbesondere im Zuge des Trends zu individuellen Einzelanfertigungen und Kleinserien. Die US 2008/0264758 A1 und die US 2008/0284094 A1 zeigen Vorrichtungen, bei denen zu bearbeitende Werkstücke einer Bearbeitungsmaschine zugeführt und die bearbeiteten Werkstücke in ein Ablagemagazin abgelegt werden. Darüber hinaus offenbart US 2004/263218 A1 eine Vorrichtung zur Zwischenlagerung plattenförmiger Werkstücke mit einem aus übereinander angeordneten Ablagefächern gebildeten Aufnahmemagazin für die plattenförmigen Werkstücke, wobei die Ablagefächer Ablageflächen aufweisen. Die Vorrichtung weist zudem zwei Aufnahmeeinrichtungen auf, die auf der gleichen Seite des Aufnahmemagazin angeordnet sind. Die Vorrichtung zur Zwischenlagerung plattenförmiger Werkstücke umfasst ferner eine Steuer- und Speichereinheit, die zur Steuerung der Aufnehmer sowie der Bewegung der Ablageflächen und zur Speicherung des Ablageortes plattenförmiger Werkstücke auf den Ablageflächen vorgesehen ist.

Es ist daher das Ziel der Erfindung eine Vorrichtung zur Zwischenlagerung plattenförmiger Werkstücke bereit zu stellen, die nicht nur eine einfache und schonende Stapelung plattenförmiger Werkstücke erlaubt, sondern insbesondere auch eine Einbindung in automatisierte Fertigungseinrichtungen ermöglicht.

Dieses Ziel wird durch die Merkmale von Anspruch 1 erreicht. Anspruch 1 bezieht sich auf eine Vorrichtung zur Zwischenlagerung plattenförmiger Werkstücke mit einem aus übereinander angeordneten Ablagefächern gebildeten Aufnahmemagazin für die plattenförmigen Werkstücke, bei der erfindungsgemäß vorgeschlagen wird, dass die Ablagefächer Ablageflächen aufweisen, die jeweils in eine erste horizontale Richtung in einen Ablagebereich und in eine zweite horizontale Richtung in einen Entnahmebereich ausfahrbar und in das Aufnahmemagazin einfahrbar sind, wobei im Ablage- und Entnahmebereich jeweils eine Aufnahmevorrichtung mit einem Aufnehmer für die plattenförmigen Werkstücke angeordnet ist, der im Ablage- oder Entnahmebereich in einer zur Ablagefläche parallelen Ebene sowie in einer zur Ablagefläche senkrechten Richtung verfahrbar ist, und eine Steuer- und Speichereinheit zur Steuerung der Ablage- und Entnahmebewegung des Aufnehmers sowie der Bewegung der Ablageflächen und zur Speicherung des Ablageortes plattenförmiger Werkstücke auf den Ablageflächen vorgesehen ist.

Die Ablageflächen erlauben eine liegende Lagerung der plattenförmigen Werkstücke. Die Handhabung der Werkstücke erfolgt dabei über Aufnehmer, die dem Ablagebereich zugeführte Werkstücke aufnehmen, durch den Ablagebereich bewegen und auf einer ausgefahrenen Ablagefläche ablegen. Die betreffende Ablagefläche wird daraufhin wieder in das Aufnahmemagazin eingefahren. In weiterer Folge kann die Ablagefläche in einen Entnahmebereich ausgefahren werden, wo ein weiterer Abnehmer das Werkstück aufnimmt und beispielsweise auf einem Förderer ablegt, der das betreffende Werkstück nachfolgenden Stationen der Fertigungseinrichtung zuführt. Die Steuerung der Ablage- und Entnahmebewegung des Aufnehmers sowie der Bewegung der Ablageflächen wird mithilfe einer Steuer- und Speichereinheit vorgenommen, die vorzugsweise über eine Schnittstelle mit der Steuerung der weiteren Abschnitte der Fertigungseinrichtung verbunden ist. In modernen Fertigungseinrichtungen werden zudem die Bewegung, der Aufenthaltsort sowie der Bearbeitungszustand einzelner Werkstücke, die die Fertigungseinrichtung durchlaufen, nachverfolgt. Die Steuer- und Speichereinheit erhält somit Datensätze über einzelne Werkstücke, die dem Ablagebereich zugeführt werden, und kennt somit beispielsweise auch die Abmessungen des betreffenden Werkstückes. Die Steuer- und Speichereinheit verfügt des Weiteren über Daten zu den augenblicklichen Ablageorten plattenförmiger Werkstücke auf den Ablageflächen des Aufnahmemagazins. Die Steuer- und Speichereinheit kann somit die Abmessungen zugeführter Werkstücke mit freien Ablageflächen abgleichen und eine Ausfahrbewegung einer freien Ablagefläche einleiten. In weiterer Folge wird die Ablagebewegung des Aufnehmers so gesteuert, dass das betreffende Werkstück auf der vorgesehenen Ablagefläche abgelegt wird. Die Daten zu den verfügbaren Ablageflächen werden entsprechend aktualisiert. Sobald die Steuer- und Speichereinheit von nachfolgenden Abschnitten der Fertigungseinrichtung die Anforderung zur Entnahme eines bestimmten Werkstückes erhält, wird der Ablageort des Werkstückes abgerufen, die entsprechende Ablagefläche in den Entnahmebereich ausgefahren und der Aufnehmer im Entnahmebereich entsprechend gesteuert, sodass in einer Entnahmebewegung das Werkstück von der ausgefahrenen Ablagefläche abgehoben und beispielsweise auf einem Förderer abgelegt wird.

Vorzugsweise sind der Ablagebereich und der Entnahmebereich an entgegengesetzten Seiten des Aufnahmemagazins angeordnet, sodass eine gleichzeitige Ablage sowie Entnahme von Werkstücken erfolgen kann und die Ablage- und Entnahmegeschwindigkeit somit erhöht werden kann. Der Aufnehmer könnte auf unterschiedliche Arten ausgeführt werden, vorzugsweise handelt es sich bei dem Aufnehmer jedoch um einen Unterdruck-Aufnehmer. Bei einem Unterdruck-Aufnehmer wird eine saugnapfähnliche Vorrichtung auf das plattenförmige Werkstück aufgesetzt und ein Unterdruck erzeugt, der das Werkstück an den Aufnehmer presst. Durch Druckausgleich wird die Haftwirkung wieder reduziert, sodass das Werkstück wieder gelöst und abgelegt werden kann.

Vorzugsweise wird ferner vorgeschlagen, dass die Ablageflächen jeweils mit rasterförmig angeordneten Nuten versehen sind. Beim Abheben eines plattenförmigen Werkstückes kann nämlich eine durch aerodynamische Effekte bewirkte Haftung an der Ablagefläche entstehen, die das Abheben des Werkstückes erschwert und durch die rasterförmige Anordnung der Nuten auf einfache Weise unterbunden wird.

Im Ablagebereich kann ein Aufnahmetisch vorgesehen sein, der mit zumindest zwei Lagesensoren für das aufzunehmende Werkstück versehen ist. Wenngleich zumeist Informationen über Typ und Eigenschaften des dem Ablagebereich zugeführten Werkstückes verfügbar sind, kann die Lage des Werkstückes doch variieren, etwa indem es um eine senkrechte Achse verdreht dem Aufnahmetisch zugeführt wurde. Daher kann es vorteilhaft sein, wenn Lagesensoren vorgesehen sind, die etwa als einfache Abstandssensoren ausgeführt sein können, die gegen eine Stirnkante des plattenförmigen Werkstückes gerichtet sind, um eine verdrehte Lage detektieren zu können. Der Aufnehmer kann in weiterer Folge das Werkstück entsprechend verschwenken, um eine passgenaue und platzsparende Ablage auf einer Ablagefläche zu ermöglichen.

Die Aufnahmevorrichtung kann etwa so ausgeführt sein, dass sie ein Gerüst umfasst, an dem ein Träger senkrecht zur Längsachse des Trägers horizontal verfahrbar gelagert ist, und am Träger ein in Längsrichtung des Trägers verfahrbarer Schlitten gelagert ist, wobei der Aufnehmer am Schlitten in eine senkrechte Richtung bewegbar gehalten ist. Die Bewegung des Trägers bewirkt gemeinsam mit der Bewegung des Schlittens eine Bewegung des Aufnehmers in einer horizontalen und zur Auflagefläche parallelen Ebene. Gemeinsam mit der in senkrechter Richtung bewegbaren Lagerung des Aufnehmers am Schlitten kann eine Bewegung des Aufnehmers in allen Raumrichtungen bewerkstelligt werden. Diese einfache Ausführung der Aufnahmevorrichtung ist aufgrund der horizontalen Ablage der Werkstücke auf den Ablageflächen möglich, sodass bei Zufuhr der Werkstücke in horizontaler Lage somit eine Ablagebewegung des Aufnehmers möglich wird, bei der das Werkstück in horizontaler Lage verbleiben kann, ohne dass Kippbewegungen oder dergleichen erforderlich wären. Die Erfindung wird in weiterer Folge anhand eines Ausführungsbeispiels mithilfe der beiliegenden Zeichnungen näher erläutert. Es zeigen hierbei die
Fig. 1 eine perspektivische Darstellung einer Ausführungsform der erfindungsgemäßen Vorrichtung,
Fig. 2 die Ausführungsform gemäß der Fig. 1 von oben gesehen,
Fig. 3 eine perspektivische Ansicht einer Ausführungsform des Aufnahmemagazins,
Fig. 4 eine Detailansicht des Aufnahmemagazins und des Aufnehmers beim Ablegen eines Werkstückes auf eine Ablagefläche des Aufnahmemagazins, und die
Fig. 5 eine weitere Ansicht der Ausführungsform gemäß der Fig. 3 von oben gesehen.

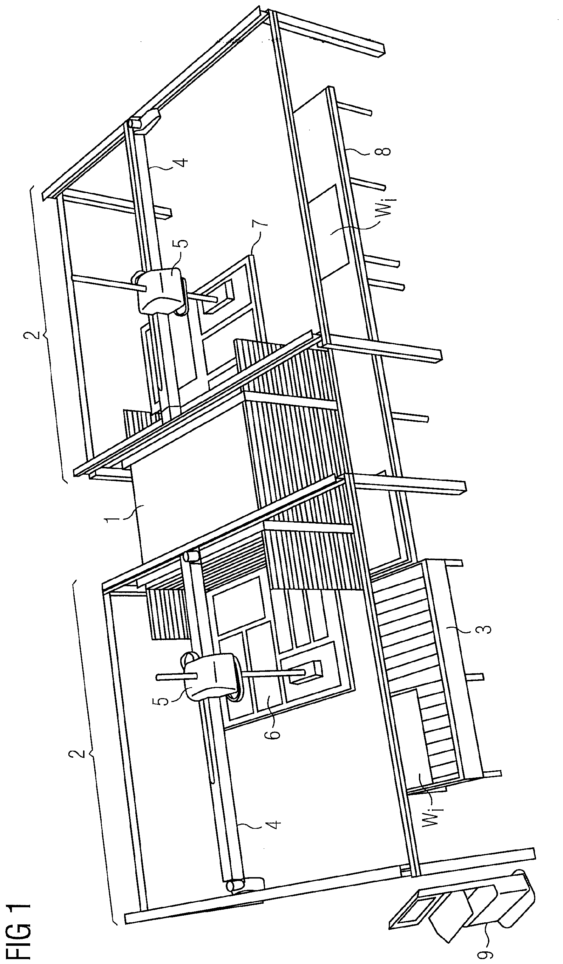

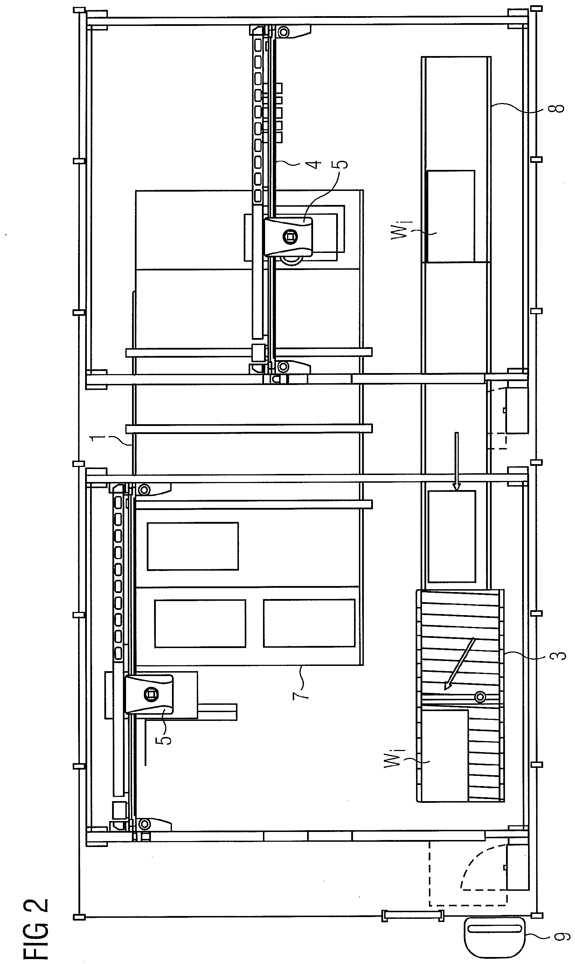

Zunächst wird auf die Fig. 1 und 2 Bezug genommen, die eine Ausführungsform der erfindungsgemäßen Vorrichtung mit einem Aufnahmemagazin 1, sowie einer in einem Ablagebereich und einem Entnahmebereich angeordneten Aufnahmevorrichtung 2 zeigen. Das Aufnahmemagazin 1 wird aus übereinander angeordneten Ablagefächern für die plattenförmigen Werkstücke gebildet, wobei die Ablagefächer Ablageflächen 7 aufweisen, die jeweils in eine erste horizontale Richtung in einen Ablagebereich, der in Bezug auf die Fig. 1 und 2 links des Aufnahmemagazins 1 angeordnet ist, und in eine zweite horizontale Richtung in einen Entnahmebereich, der in Bezug auf die Fig. 1 und 2 rechts des Aufnahmemagazins 1 angeordnet ist, ausfahrbar und in das Aufnahmemagazin 1 einfahrbar sind. In der gezeigten Ausführungsform der Fig. 1-5 sind der Ablagebereich und der Entnahmebereich an gegenüberliegenden Seiten des Aufnahmemagazins 1 angeordnet. Im Ablagebereich ist ferner ein Aufnahmetisch 3 angeordnet dem abzulegende Werkstücke Wᵢ zugeführt werden. In der Fig. 1 befindet sich etwa das Werkstück W₁ auf dem Aufnahmetisch 3.

Im Ablagebereich und dem Entnahmebereich ist jeweils ein Gerüst angeordnet, an dem oberhalb des Aufnahmemagazins 1 jeweils ein Träger 4 senkrecht zur Längsachse des Trägers 4 horizontal verfahrbar gelagert ist. Am jeweiligen Träger 4 ist ein in Längsrichtung des Trägers 4 verfahrbarer Schlitten 5 gelagert. Auf dem Schlitten 5 ist wiederum ein Aufnehmer 6 in eine senkrechte Richtung bewegbar gehalten. Die Bewegung des Trägers 4 bewirkt gemeinsam mit der Bewegung des Schlittens 5 eine Bewegung des Aufnehmers 6 in einer horizontalen Ebene. Gemeinsam mit der in senkrechter Richtung bewegbaren Lagerung des Aufnehmers 6 am Schlitten 5 kann eine Bewegung des Aufnehmers 6 in allen Raumrichtungen bewerkstelligt werden. Der Aufnehmer 6 des Ablagebereiches ist insbesondere in der Lage eine Ablagebewegung zu vollziehen, bei der ein Werkstück Wᵢ vom Aufnahmetisch 3 aufgenommen, über eine ausgefahrene Ablagefläche 7 bewegt und auf der vorgesehenen Ablagefläche 7 abgelegt wird. Der Aufnehmer 6 des Entnahmebereiches ist insbesondere in der Lage eine Entnahmebewegung zu vollziehen, bei der ein Werkstück Wᵢ von einer ausgefahrenen Ablagefläche 7 abgehoben und auf einem Förderer 8 abgelegt wird.

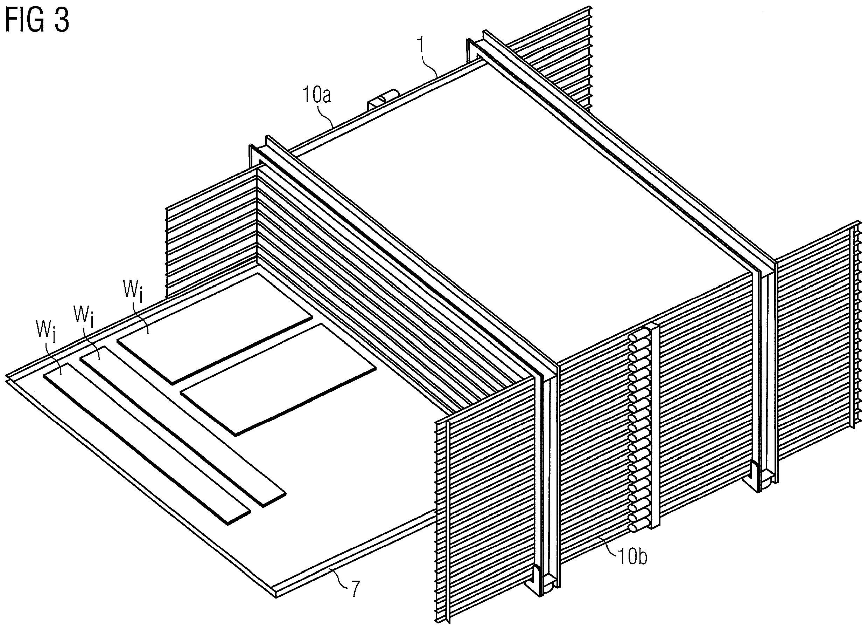

Das Aufnahmemagazin 1 wird anhand der Fig. 3 erläutert. Das Aufnahmemagazin 1 wird aus einem im Wesentlichen quaderförmigen Kasten gebildet, der in seinem Inneren eine Mehrzahl übereinander angeordneter Ablageflächen 7 aufweist, die jeweils in seitlichen Führungsschienen beweglich gelagert sind. Die seitlichen Führungsschienen sind an gegenüberliegenden Seitenflächen 10a, 10b des Aufnahmemagazins 1 angeordnet, wobei für eine bessere Führung der Ablageflächen 7 diese Seitenflächen 10a, 10b in Richtung des Ablage- und Entnahmebereiches verlängert sind. Die Ablageflächen 7 werden mithilfe von Riemenzügen, Zahnriemen, Zahnstangen oder dergleichen angetrieben und von den jeweiligen Ablageflächen 7 zugeordnete Motoren in Bewegung versetzt. Die Motoren der Ablageflächen 7 werden von einer Steuer- und Speichereinheit 9 angesteuert (siehe etwa Fig. 1). In der Fig. 3 ist eine Ablagefläche 7 in einer ausgefahrenen Position dargestellt, auf der sich bereits vier abgelegte Werkstücke Wᵢ befinden.

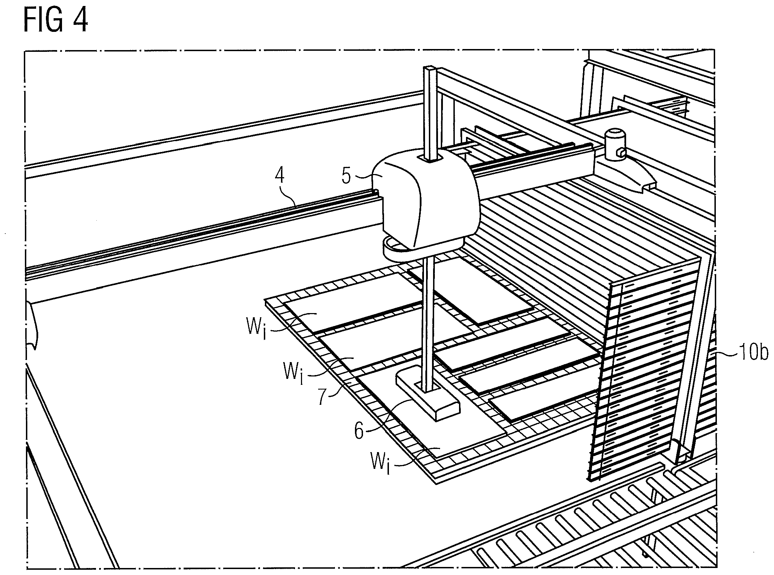

Bei dem Aufnehmer 6 handelt es sich im gezeigten Ausführungsbeispiel um einen Unterdruck-Aufnehmer, bei dem eine saugnapfähnliche Vorrichtung auf das plattenförmige Werkstück Wᵢ aufgesetzt und ein Unterdruck erzeugt wird, der das Werkstück Wᵢ an den Aufnehmer 6 presst (siehe etwa Fig. 4). Durch Druckausgleich wird die Haftwirkung wieder reduziert, sodass das Werkstück Wᵢ wieder gelöst und abgelegt werden kann. Auch die Steuerung der Bewegung des Aufnehmers 6 sowie die Steuerung des Unterdrucks werden mithilfe der Steuer- und Speichereinheit 9 vorgenommen.

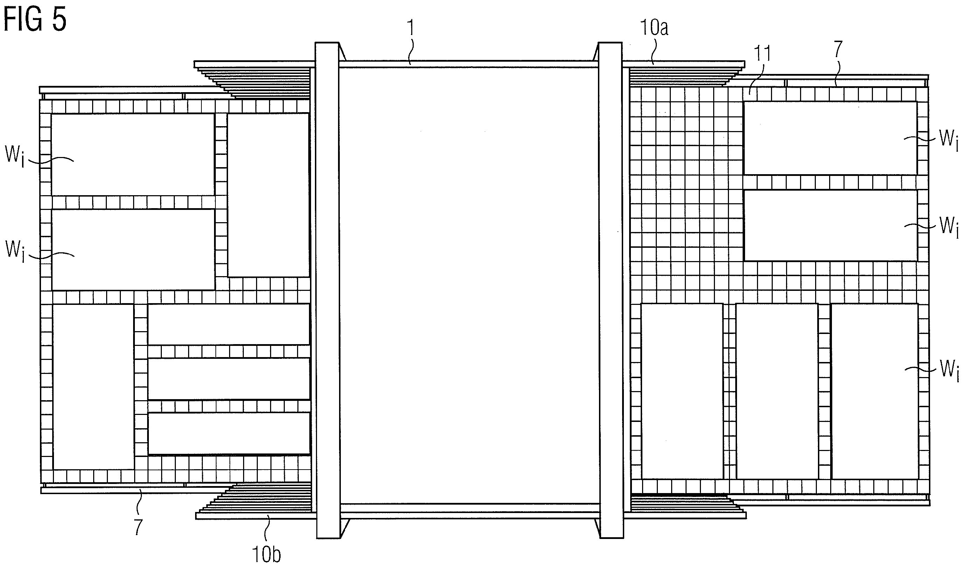

Wie der Fig. 5 entnommen werden kann, weisen die Ablageflächen 7 jeweils rasterförmig angeordnete Nuten 11 auf. Beim Abheben eines plattenförmigen Werkstückes Wᵢ kann nämlich eine durch aerodynamische Effekte bewirkte Haftung an der Ablagefläche 7 entstehen, die das Abheben des Werkstückes Wᵢ erschwert und durch die rasterförmige Anordnung der Nuten 11 auf einfache Weise unterbunden wird.

Wie bereits erwähnt wurde, werden in modernen Fertigungseinrichtungen die Bewegung, der Aufenthaltsort sowie der Bearbeitungszustand einzelner Werkstücke Wᵢ, die die Fertigungseinrichtung durchlaufen, nachverfolgt. Diese Überwachung kann beispielsweise mithilfe von Transpondern, RFID-Chips oder Sensoren anderer Art vorgenommen werden, die an den Werkstücken Wᵢ und/oder entlang der Fertigungsstraßen angeordnet sind. Die Steuer- und Speichereinheit 9 ist über eine Schnittstelle mit der Steuerung der weiteren Abschnitte der Fertigungseinrichtung verbunden und erhält somit Datensätze über einzelne Werkstücke Wᵢ, die dem Ablagebereich zugeführt werden, und kennt somit beispielsweise auch die Abmessungen des betreffenden Werkstückes Wᵢ. Die Steuer- und Speichereinheit 9 verfügt des Weiteren über Daten zu den augenblicklichen Ablageorten plattenförmiger Werkstücke Wᵢ auf den Ablageflächen 7 des Aufnahmemagazins 1. Die Steuer- und Speichereinheit 9 kann somit die Abmessungen zugeführter Werkstücke Wᵢ mit freien Ablageflächen 7 abgleichen und eine Ausfahrbewegung einer freien Ablagefläche 7 einleiten. In weiterer Folge wird die Ablagebewegung des Aufnehmers 6 so gesteuert, dass das betreffende Werkstück Wᵢ auf der vorgesehenen Ablagefläche 7 abgelegt wird.

Wenngleich zumeist Informationen über Typ und Eigenschaften des dem Ablagebereich zugeführten Werkstückes Wᵢ verfügbar sind, kann die Lage des Werkstückes Wᵢ auf dem Aufnahmetisch 3 doch variieren, etwa indem es um eine senkrechte Achse verdreht dem Aufnahmetisch 3 zugeführt wurde. Daher sind Lagesensoren am Aufnahmetisch 3 vorgesehen, die etwa als einfache Abstandssensoren ausgeführt sein können, die gegen eine Stirnkante des plattenförmigen Werkstückes Wᵢ gerichtet sind, um eine verdrehte Lage detektieren zu können. Der Aufnehmer 6 kann in weiterer Folge das Werkstück Wᵢ entsprechend verschwenken, um eine passgenaue und platzsparende Ablage auf einer Ablagefläche 7 zu ermöglichen. Nach Ablage eines Werkstückes Wᵢ auf einer Ablagefläche 7 werden die Daten zu den verfügbaren Ablageflächen 7 entsprechend aktualisiert. Sobald die Steuer- und Speichereinheit 9 von nachfolgenden Abschnitten der Fertigungseinrichtung die Anforderung zur Entnahme eines bestimmten Werkstückes Wᵢ erhält, wird der Ablageort des betreffenden Werkstückes Wᵢ abgerufen, die entsprechende Ablagefläche 7 in den Entnahmebereich ausgefahren und der Aufnehmer 6 im Entnahmebereich entsprechend gesteuert, sodass in einer Entnahmebewegung das Werkstück Wᵢ von der ausgefahrenen Ablagefläche 7 abgehoben und auf dem Förderer 8 abgelegt wird.

Auf diese Weise wird eine Vorrichtung zur Zwischenlagerung plattenförmiger Werkstücke bereitgestellt, die nicht nur eine einfache und schonende Stapelung plattenförmiger Werkstücke Wᵢ erlaubt, sondern insbesondere auch eine Einbindung in automatisierte Fertigungseinrichtungen ermöglicht.

## Patentansprüche

1. Vorrichtung zur Zwischenlagerung plattenförmiger Werkstücke (Wᵢ) mit einem aus übereinander angeordneten Ablagefächern gebildeten Aufnahmemagazin (1) für die plattenförmigen Werkstücke (Wᵢ) wobei die Ablagefächer Ablageflächen (7) aufweisen, die jeweils in eine erste horizontale Richtung in einen Ablagebereich und in eine zweite horizontale Richtung in einen Entnahmebereich ausfahrbar und in das Aufnahmemagazin (1) einfahrbar sind, wobei im Ablage- und Entnahmebereich jeweils eine Aufnahmevorrichtung (2) mit einem Aufnehmer (6) für die plattenförmigen Werkstücke (Wᵢ) angeordnet ist, der im Ablage- oder Entnahmebereich in einer zur Ablagefläche (7) parallelen Ebene sowie in einer zur Ablagefläche (7) senkrechten Richtung verfahrbar ist, und eine Steuer- und Speichereinheit (9) zur Steuerung der Ablage- und Entnahmebewegung des Aufnehmers (6) sowie der Bewegung der Ablageflächen (7) und zur Speicherung des Ablageortes plattenförmiger Werkstücke (Wᵢ) auf den Ablageflächen (7) vorgesehen ist.

2. Vorrichtung nach Anspruch 1, **dadurch gekennzeichnet, dass** der Ablagebereich und der Entnahmebereich an entgegengesetzten Seiten des Aufnahmemagazins (1) angeordnet sind.

3. Vorrichtung nach Anspruch 1 oder 2, **dadurch gekennzeichnet, dass** es sich bei dem Aufnehmer (6) um einen Unterdruck-Aufnehmer handelt.

4. Vorrichtung nach einem der Ansprüche 1 bis 3, **dadurch gekennzeichnet, dass** die Ablageflächen (7) jeweils mit rasterförmig angeordneten Nuten (11) versehen sind.

5. Vorrichtung nach einem der Ansprüche 1 bis 4, **dadurch gekennzeichnet, dass** ein Aufnahmetisch (3) im Ablagebereich vorgesehen ist, der mit zumindest zwei Lagesensoren für das aufzunehmende Werkstück (Wᵢ) versehen ist.

6. Vorrichtung nach einem der Ansprüche 1 bis 5, **dadurch gekennzeichnet, dass** die Aufnahmevorrichtung (2) ein Gerüst umfasst, an dem ein Träger (4) senkrecht zur Längsachse des Trägers (4) horizontal verfahrbar gelagert ist, und am Träger (4) ein in Längsrichtung des Trägers (4) verfahrbarer Schlitten (5) gelagert ist, wobei der Aufnehmer (6) am Schlitten (5) in eine senkrechte Richtung bewegbar gehalten ist.

## Claims

1. Device for temporarily storing plate-shaped workpieces (Wᵢ) having a receiving magazine (1) for the plate-shaped workpieces (Wᵢ), which magazine is formed by storage compartments arranged one above the other, wherein the storage compartments have storage surfaces (7) which can each be extended in a first horizontal direction into a storage region and in a second horizontal direction into a removal region and can be retracted into the receiving magazine (1), wherein a receiving device (2) with a receiver (6) for the plate-shaped workpieces (Wᵢ) is arranged in each case in the storage and removal region, which receiving device (2) is movable in the storage or removal region in a plane parallel to the storage surface (7) and in a direction perpendicular to the storage surface (7), and a control and storage unit (9) is provided for controlling the storage and removal movement of the receiver (6) and the movement of the storage surfaces (7) and for storing the storage location of plate-shaped workpieces (Wᵢ) on the storage surfaces (7).

2. Device according to claim 1, **characterized in that** the storage region and the removal region are arranged on opposite sides of the receiving magazine (1).

3. Device according to claim 1 or 2, **characterized in that** the receiver (6) is a vacuum receiver.

4. Device according to one of claims 1 to 3, **characterized in that** the storage surfaces (7) are each provided with grooves (11) arranged in a grid-like manner.

5. Device according to one of claims 1 to 4, **characterized in that** a receiving table (3) is provided in the storage region, which is provided with at least two position sensors for the workpiece (Wᵢ) to be received.

6. Device according to one of claims 1 to 5, **characterized in that** the receiving device (2) comprises a frame on which a support (4) is mounted so as to be horizontally displaceable perpendicularly to the longitudinal axis of the support (4), and a carriage (5) which is displaceable in the longitudinal direction of the support (4) is mounted on the support (4), wherein the receiver (6) is held on the carriage (5) so as to be displaceable in a vertical direction.

## Revendications

1. Dispositif pour l'entreposage de pièces d'oeuvre en forme de plaques (Wᵢ) avec un magasin de réception (1) formé de rayonnages superposés pour les pièces d'oeuvre en forme de plaques (Wᵢ), dans lequel les rayonnages comportent des surfaces de rangement (7) qui peuvent être sorties chacune dans une première direction horizontale dans une zone de rangement et dans une deuxième direction horizontale dans une zone de prélèvement et rentrées dans le magasin de réception (1), dans lequel un dispositif de réception (2) muni d'un organe de réception (6) est disposé dans la zone de rangement et un autre dans la zone de prélèvement pour les pièces d'oeuvre en forme de plaques (Wᵢ) et peut être déplacé dans le zone de rangement ou la zone de prélèvement dans un plan parallèle à la surface de rangement (7) ainsi que dans une direction perpendiculaire à la surface de rangement (7), et dans lequel une unité de commande et d'enregistrement (9) est prévue pour commander le mouvement de rangement et de prélèvement de l'organe de réception (6) ainsi que le mouvement des surfaces de rangement (7) et pour enregistrer le lieu de rangement de pièces d'oeuvre en forme de plaques (Wᵢ) sur les surfaces de rangement (7).

2. Dispositif selon la revendication 1, **caractérisé en ce que** la zone de rangement et la zone de prélèvement sont disposées sur des côtés opposés du magasin de réception (1).

3. Dispositif selon la revendication 1 ou 2, **caractérisé en ce que** l'organe de réception (6) est un organe de réception à pression négative.

4. Dispositif selon l'une des revendications 1 à 3, **caractérisé en ce que** les surfaces de rangement (7) sont munies chacune de rainures (11) disposées selon un quadrillage.

5. Dispositif selon l'une des revendications 1 à 4, **caractérisé en ce qu'**une table de réception (3) munie d'au moins deux capteurs de position pour la pièce d'oeuvre (Wᵢ) à recevoir est prévue dans la zone de rangement.

6. Dispositif selon l'une des revendications 1 à 5, **caractérisé en ce que** le dispositif de réception (2) comprend un châssis sur lequel un support (4) est supporté avec possibilité de déplacement le long de l'axe longitudinal du support (4) dans le sens horizontal et un chariot (5) déplaçable dans le sens longitudinal du support (4) est porté sur le support (4), l'organe de réception (6) étant retenu sur le chariot (5) avec possibilité de déplacement dans une direction verticale.
